**Europäisches Patentamt**

(19) **European Patent Office**

**Office européen des brevets**

(11) **EP 0 494 223 B1**

## (12) EUROPEAN PATENT SPECIFICATION

(45) Date of publication and mention
of the grant of the patent:
**09.04.1997 Bulletin 1997/15**

(21) Application number: **90914799.3**

(22) Date of filing: **25.09.1990**

(51) Int. Cl.[6]: **A47J 43/28**

(86) International application number:
**PCT/SE90/00610**

(87) International publication number:
**WO 91/04699 (18.04.1991 Gazette 1991/09)**

(54) **SPAGHETTI TOOL**

SPAGHETTIGERÄT

USTENSILE DE DOSAGE

(84) Designated Contracting States:
**AT BE CH DE ES FR GB IT LI NL SE**

(30) Priority: **26.09.1989 SE 8903157**

(43) Date of publication of application:
**15.07.1992 Bulletin 1992/29**

(73) Proprietor: **PRODUKTUTVECKLINGSBOLAGET NI AKTIEBOLAGET
750 15 Uppsala (SE)**

(72) Inventor: **LISS, Olle
S-750 15 Uppsala (SE)**

(56) References cited:
**US-A- 2 664 630          US-A- 2 810 957
US-A- 4 120 094          US-A- 4 165 565
US-D- 0 265 158          US-D- 0 284 342**

EP 0 494 223 B1

## Description

### Background and technical field

This invention relates to a spaghetti grabber by means of which it is possible to accurately descide how large the amount of spaghetti to be cooked should be, in order to obtain the desired cooked amount.

### State of the art and problems

When cooking spaghetti there exists a general problem, since it is hard to estimate that amount cooked spaghetti a certain amount uncooked spaghetti will result in. The problem is due to the fact that spaghetti when beeing cooked sweells considerably. The ratio of swelling is in priniple constant per unit of volume, but as has already been said it is difficult to estimate. This difficulti very often results in either an insufficiently amount of cooked spaghetti or an excessive amount.Both of which beeing of course undesired.

A known device for metering spaghetti is a plate in which there are a number of holes, by means of which it is possible to mete a certain amount of spaghetti. This known device, however; present a number of disadvantages. Firstly it is rather complicated to use if a certain precision is desired. Further it is relatively space-occupying and inflexible. Moreover this knownn device presents a meter per se, which cannot be used for other purposes, in a citchen which is already overwhealmed with devices. This latter disadvantage also relates to the spaghetti metering device shown in US-4120094. There is known a grabber, solving this latter problem, by means of which grabber it is possible to mete the amount of uncooked spaghetti and also to grab the cooked spaghetti. The metering device of this latter grabber, however, uses the same principle as said plate, i.e a hole, which as has been already mentioned is relatively complicated to use. Furthermore the use of holes limits the possibilities of having several different measures and does also limit the possible maximum size of the metering device in a considerable manner.

Furthermore US-designpatent-284342 (appl.No 480250) also shows a grabber including a metering device, which is very similar to the above described grabber but which metering device consists of a slightly opened annulus which is positioned at the opposite side of the grabbing device. Accordingly both of these prior art grabbers do not provide a support for the spaghetti which is being measured, which is a major disadvantage.

### Solution and advantages

It is an object of the invention to create a grabber by means of which the above mentioned disadvantages are eliminated.

The invention is based on the fact that a certain amount of uncooked spaghetti after beeing cooked, boiling for a certain amont of time, has absorbed a certain amount of fluid. The increase in volume is accordingly predeterminable and therefore also the amount of cooked spaghetti, if the starting-amount (amount=volume). Further the density is also substantially constant, which implies that the increase in wheigt is also predeterminable.

Cosidering the above it is realized that a cooked portion of spaghetti could be metered before cooking, by metering of the corresponding volume of uncooked spaghetti.

The object of the invention is accordingly to create a grabber by means of which it the volume and therefore also the weight of a ceratin amount of uncooked spaghetti can be easily determined, to make the number of portions beeing cooked predeterminable at the same time as it after cooking enables grabbing of the cooked spaghetti. Such a grabber diminishes the number of grabbers in the kitchen and eliminates the risk of not finding one of the necessary grabbers. Moreover the invention provides the above advantages in a very effective and functional manner by using parts of the grabber which are "necessary" for the grabbing of the cooked spaghetti to form supporting means for the metering of uncooked spaghetti. Further these supporting means can be made many and most of all they are very easy to use, since it is possible to place the spaghetti therein without beeing forced to come from one certain direction.

For a given product of spaghetti it can be assumed that the lengt is almoust constant. Hence, it is possible to determine the volume by metering the area of the cross-section of a bunch of spaghetti, whose lengt L is constant. The cross-sectional area Y can be metered in many ways. The volume, however, is always calculated in the same way, i.e by multiplication of the cross-sectinal area and the length, Y x L.

The device in accordance with the invention accordingly preferably presents a grabber by means of which it is possible to directly mete the number of portions.

### Brief description of the drawings

In the following the invention will be described more in detail, by way of example only, wiyh reference to the drawings in which;

Fig. 1    Shows a first embodiment of a grabber in accordance with the invention,

Fig. 2    Shows the above grabber seen from above,

Fig. 3    Shows the above grabber in a side-view,

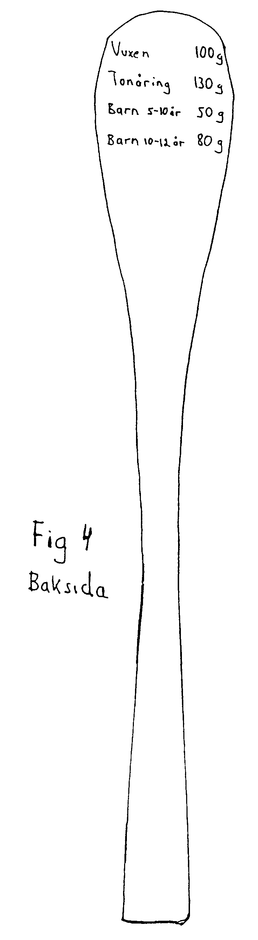

Fig. 4    Shows a preferred back-side of the above grabber,

Fig.5, 6     show the use of the grabber,

Fig. 7     is a more detailed presentation of fig. 2, and,

Fig. 8     Shows perspective view of a preferred embodiment of the invention.

<u>Description of the preferred embodiment</u>

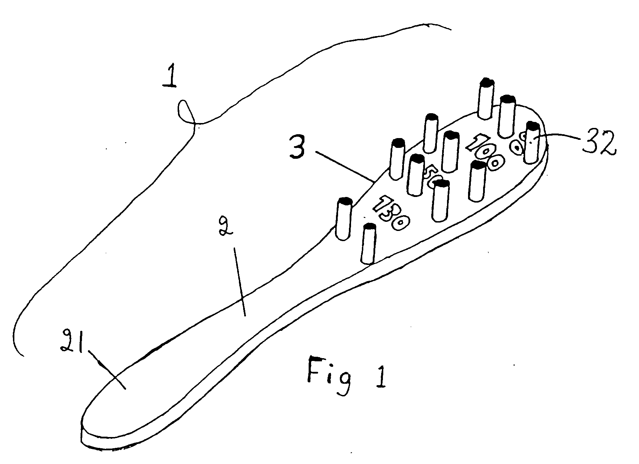

Fig. 1 shows a grabber 1 having a shaft 2 with a grippable portion 21 and a spaghetti grabbing device 3. Said device 3 consists of a basic surface 31, from which a number of elements 32 protrude.

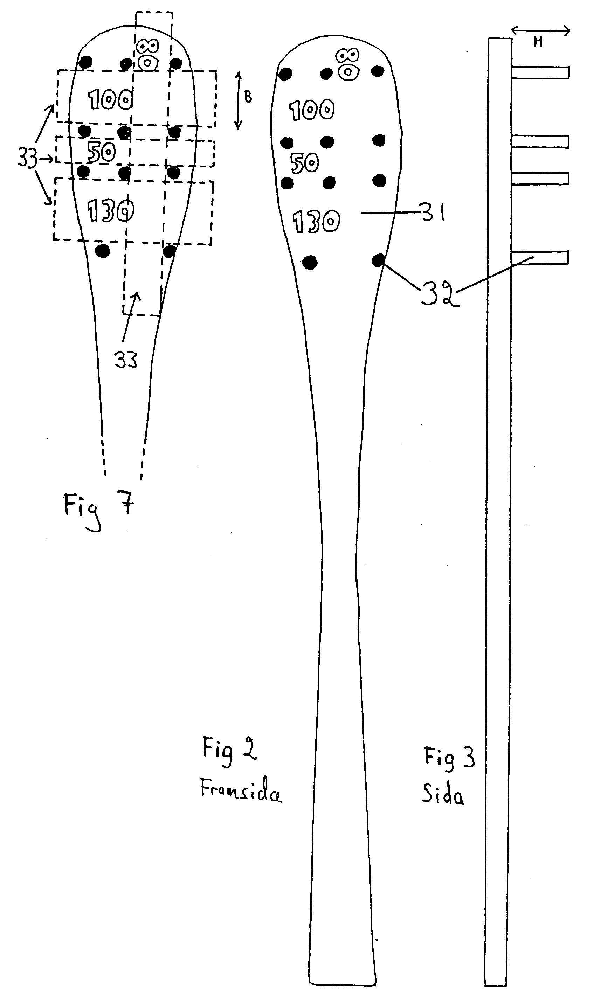

These protruding elements 32 (se also Fig.2 and 3) are symmetrically positioned in certain predetermined directions, so that they devide the basic surface 31 into a number of separate rektangulare basic areas 33 (se Fig.7). The width B of such an area 33 is accordingly constant within each such separate area. Furthermore, it is shown that each protruding element 32 has the same hight H.

According to the invention the shown grabber functions both as a spaghetti grabbing grabber, for cooked spaggeti in a known manner, as well as a metering grabber, as will be described below. Assuming that the grabber is developed for a certain kind of spaghetti S , each spaghetti having a given length $L_S$, a given diamete $D_S$ and a given density $\sigma_S$.

Hence the weight of a spaghetti is as follows;

$$\frac{L_S \times D_S{}^2 \times \pi}{4} \times \sigma_S$$

Accordingly the weight of a certain number $N_S$ of spaghetti is as follows;

$$\frac{L_S \times D_S{}^2 \times \pi}{4} \times \sigma_S \times NS$$

All of the above factors are constant except for $N_S$, i.e the weigt of spaghetti is proportional to the number of indivinduel spaghettis.

If a tightly packed bunch of spaghetti is created, it can be assumed that each spaghetti occupies a cross-sectional area which corresponds two times the diameter, $D_S$. Hence the total cross-sectional area of that bunch is $D_S{}^2 \times N_S$. Accordingly the total cross-sectional area $Y_S$ is directly proportional to the number $N_S$, and therefore the surface is also directly proportional to the amount/weight of the bunch.

By metering the cross-sectional area $Y_S$ of a bunch of spaghetti it is accordingly possible to directly determine the amount of spaghetti therein. This surface can either be determined by metering of the diamete $D_S$ if round, or two perpendicular adjacent sides if rectangular or the base and the height if triangular, etc, whereafter these variables in a known manner are used to calculate said surface.For the grabber shown in Fig.1 the principle of the rectangle has been practiced. Accordingly the heigth H and the widht B have been choosen, corresponding to a desired cross-sectional area B x H. Empiric trials have determined how large the cross-sectional area has to be for a portion of each respective product of spaghetti.

The grabber can be devided into a number of sections having different cross-sectional areas. Each such section could then be used to specify different sizes of portions for one certain spaghetti product. Another possibility is to use one and the same grabber for metering of a number of different spaghetti products and that accoringly each section defines one portion of a respective spaghetti product. In the first case each section is marked with the respective amount whereas in the second case each section is marked in order to tell for which spaghetti product it defines a "normal" portion thereof. It has been found that a common type of spaghetti has a lengt of about 10 inches (ca 25 cm) and that this kind of spaghetti amounts to one normal portion (ca 100 g) if the cross-sectional area of the bunch is ca 300 $mm^2$.

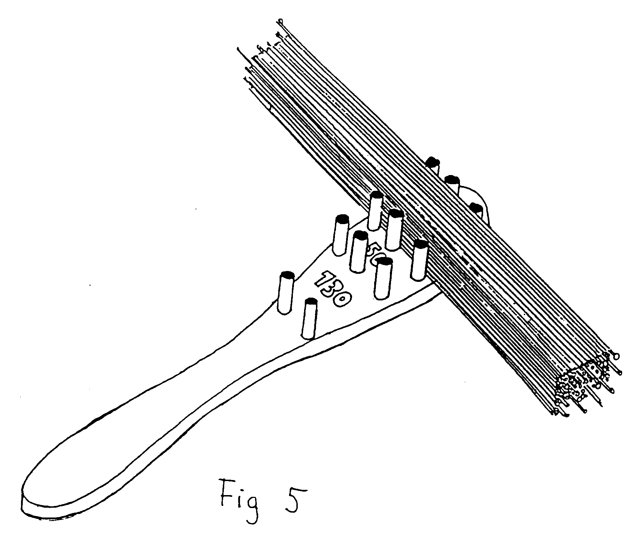

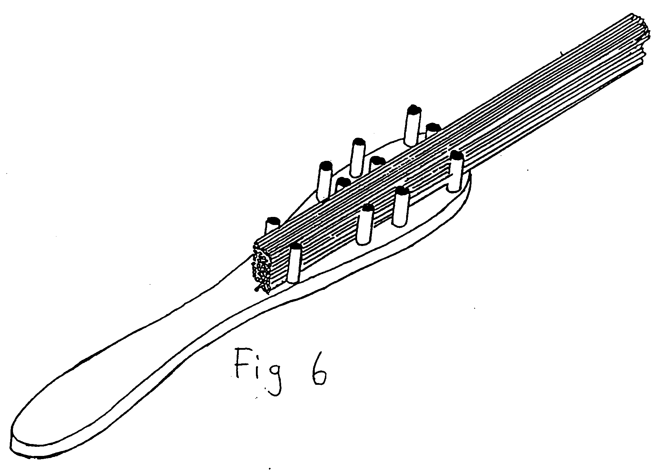

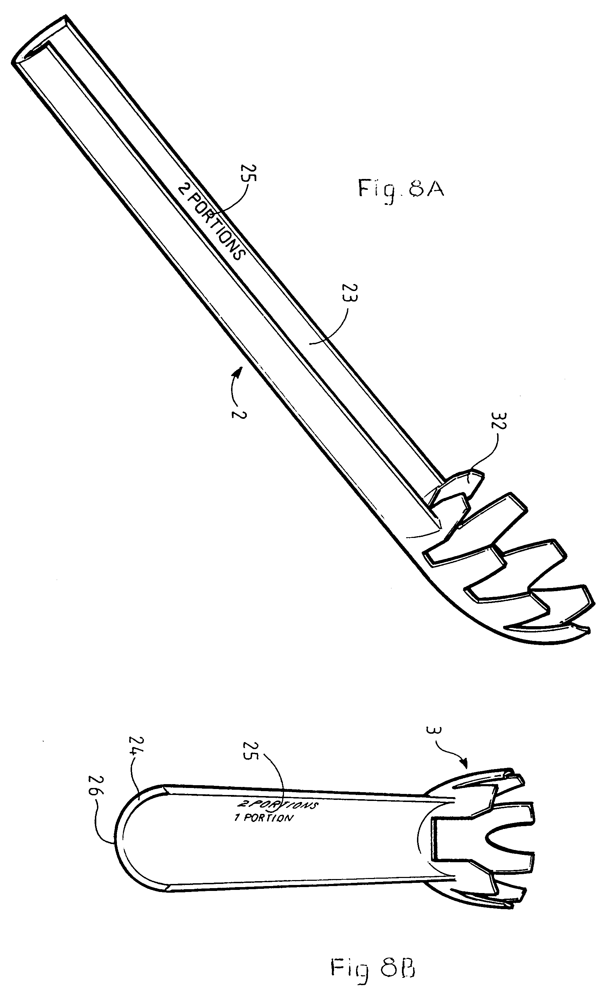

By means of a grabber in accordance with the invention it is easy to determine the amount of spaghetti that is to be cooked, and accordingly the final amount. Hence, one grabbs a bunch of spaghetti and puts it easily into the desired section (see Fig.5 and 6). If it is a grabber of the first mentioned kind, i.e only for one spaghetti product and different markings for different portions, one choses that section which results in the desired quantity, e.g a small portion, a normal portion or a large portion.

If it is desired to cook three normal portions of one spaghetti product, one repetedly meters three bunches in that section that is marked defining the normal portion. It is important that the section is filled to the top to obtain the exact amount. It is evident that this enables any desired number of portions to be metered, beeing of desirably sized.

It should be noted that the delimitations of the sections that is shown in Fig.1 are arranged both in a lengthwise direction as in a transversal direction (se also Fig.5 and 6).

In Fig. 8 there is shown a preferred embodiment of the invention. A differing feature is that the shaft 2 is used to mete. Accordingly the shaft 2 is designed in a semitubelike manner so as to have curved walls 2 presenting an inner surface 23 suitable for metering of spaghetti. This design also provides stiffnes to the shaft. The largest amount that can be metered corresponds to 2 portions and is shown by a marking 25 adjacent the top edge of the shaft 2. Below the mentioned marking there is a "1-portion" marking, which when beeing almost totally covered by spaghetti (the grabber beeing held substantially horisontal) defines the level for 1 portion. Further, as in the above embodiment, it is foreseen that the basic portion 3 may also be used to mete, by using the supporting means defined by two opposing gaps between adjacent and opposing protruding elements 32 respectively. The free end of the shaft 2 has a tapered portion 24 by means of which a relatively sharp edge 26 is created. This design enables an especially easy way of metering, since the grabber thereby easily can be pushed into a larger bunch, e.g a spaghetti containing box, and there after the shaft 2 can be retracted filled with spaghetti by appropriate assistance of the fingers and especially if the box is appropriately leaned.

The grabber is preferably made in a polymer and by form moulding. The portions are preferably multiples of half a portion or only whole portions. A preferred normal portion amounts to about 100 g which normally gives a cross-sectional area of ca 300 mm$^2$, and an optimum should be found within a 10 % deviation. Of course there could also be markings defining portions for children, i.e between 50 and 100 g.

The skilled man realises that the invention is not limited by the above but can be varied within the scoope of the invention. It is accordingly possible to arrange the protruding devices 32 in an obliquely manner in relation to at laest one the planes, so that the profile of the cross-section will have the form of a triangle with its top being cut-off. Such a design could make it easier to put the spaghetti into the grabber 1. Further it is of course possible that each section defines both a certain amount for a certain spaghetti product as well as the amount for another kind of a spaghetti product.

The shown preferred embodiment could insted of, or in combination with, the shown "1-portion" marking have a groove-like or similar means witih the shaft, which would create something like a longitudinally extending fold in the shaft or preferrably two symetrically psoitioned such folds. Further the metering portion of the shaft must not be totally upwardly open, as is shown, but could be made partly upwardly open (i.e the U-like cross-section would be close to an O) or indeed be of a totally closed tube-like configuration, e.g circle-like cross-section, which then has to be combined with at least one transversal groove to enable retaining of spaghetti ones it is within the shaft.

In a preferred embodiment of the invention, however, each grabber is designed for metering a certain spaghetti product, whereby the grabber preferably is clearly marked for which spaghetti product it is intended. Thanks to the low cost of a grabber in accordance with the invention it is not unlikely that each houshold has several grabbers, i.e one for each different spaghetti product one uses. Further it is evident that the markings do not have to be integral with the grabber, but may be adhesive labels or other known easily atachable marking means. Moreover it is of course possible to only inform, e.g a loose paperslip in the package to be sold, about the size of the markings if in the form of folds or similar or filled up portion devices.

## Claims

1. Spaghetti grabber, comprising a shaft (2) having a grippable portion (21), a basic portion (3) which is located at one of the ends of said shaft and protruding elements (32) protruding from said basic portion (3) for grabbing of cooked spaghetti, **characterized in that** certain parts (23;31,32) of said grabber define at least one supporting means including at least two substantially U-like surfaces which are spaced apart along an imaginary straight line and symmetrically positioned in relation to each other and said line so as to form a cross-sectional area which is substantially constant along said line and that the grabber is delivered with a marking (25) defining the amount of spaghetti that can be metered within said supporting means.

2. Spaghetti grabber according to claim 1, **characterized in that** said supporting means is defined by the inner walls (23) of said shaft (2) and/or at least partly by said protruding elements (32).

3. Spaghetti grabber according to claim 1, **characterized in that** the hight (H) of each protruding element (32) that is opposingly positioned and symmetrically positioned in relation to each other and said line is equal.

4. Spaghetti grabber according to claim 3, **characterized in that** the distance at the base (B) between two protruding elements (32) being accordingly positioned is also equal and accordingly that the distance between the free ends of the protruding elements is also equal.

5. Spaghetti grabber according to claim 1, **characterized in that** the markings on the grabber defines the amount in a portion related manner.

6. Spaghetti grabber according to claim 1, **characterized in that** said cross-sectional area exceeds 150 mm$^2$+-10% and/or is multiple of 1,2,3,4,etc thereof.

7. Spaghetti grabber according to claim 1, **characterized in that** said cross-sectional area is equal to 300 mm$^2$ and/or is a multiple of 1;1,5;2;2,5;3;etc thereof.

8. Spaghetti grabber according to claim 2, **characterized in that** the free end of the shaft (2) has a tapered portion (24) so that a substantially sharp edge (26) is formed.

9. Spaghetti grabber according to claim 1, **characterized in that** said marking is fitted on said grabber.

10. Spaghetti grabber according to claim 9, **characterized in that** said marking preferably is integral with said grabber and that it either is in written or is a symbol and preferably is positioned on the concave side (23) in respect of said supporting means.

## Patentansprüche

1. Spaghettigreifer aus einem Stiel (2) mit einem Griffteil (21), einem Grundteil (3), der sich an einem der Enden jenes Stiels befindet, und vorstehenden Elementen (32), die aus jenem Grundteil (3) zum Aufnehmen von gekochten Spaghetti vorstehen, dadurch gekennzeichnet, daß gewisse Teile (23; 31, 32) jenes Greifers mindestens ein Stützmittel definieren, das mindestens zwei im wesentlichen U-ähnliche Flächen umfaßt, die entlang einer gedachten geraden Linie beabstandet und symmetrisch zueinander und jener Linie angeordnet sind und so eine Querschnittsfläche bilden, die entlang jener Linie im wesentlichen konstant ist, und daß der Greifer mit einer Markierung (25) geliefert wird, die die Spaghettimenge definiert, die in jenem Stützmittel abgemessen werden kann.

2. Spaghettigreifer nach Anspruch 1, dadurch gekennzeichnet, daß jenes Stützmittel von den Innenwänden (23) jenes Stiels (2) und/oder mindestens teilweise von jenen vorstehenden Elementen (32) definiert wird.

3. Spaghettigreifer nach Anspruch 1, dadurch gekennzeichnet, daß alle vorstehenden Elemente (32), die einander gegenüber sowie zueinander und in bezug auf jene Linie symmetrisch angeordnet sind, die gleiche Höhe (H) haben.

4. Spaghettigreifer nach Anspruch 3, dadurch gekennzeichnet, daß die Entfernung zwischen zwei entsprechend angeordneten vorstehenden Elementen (32) an der Basis (B) ebenfalls gleich ist, und daß dementsprechend die Entfernung zwischen den freien Enden der vorstehenden Elemente auch gleich ist.

5. Spaghettigreifer nach Anspruch 1, dadurch gekennzeichnet, daß die Markierungen an dem Greifer die Menge in Portionen definieren.

6. Spaghettigreifer nach Anspruch 1, dadurch gekennzeichnet, daß jene Querschnittsfläche größer als 150 mm$^2$ ± 10% und/oder ein 1faches, 2faches, 3faches, 4faches usw. davon ist.

7. Spaghettigreifer nach Anspruch 1, dadurch gekennzeichnet, daß jene Querschnittsfläche gleich 300 mm$^2$ und/oder ein 1faches, 1,5faches, 2faches, 2,5faches, 3faches usw. davon ist.

8. Spaghettigreifer nach Anspruch 2, dadurch gekennzeichnet, daß das freie Ende des Stiels (2) einen sich verjüngenden Teil (24) aufweist, so daß eine im wesentlichen scharfe Kante (26) gebildet wird.

9. Spaghettigreifer nach Anspruch 1, dadurch gekennzeichnet, daß jene Markierung an jenem Greifer angebracht ist.

10. Spaghettigreifer nach Anspruch 9, dadurch gekennzeichnet, daß jene Markierung mit jenem Greifer vorzugsweise aus einem Stück ist und daß es sich dabei entweder um einen Schriftzug oder ein Symbol handelt und sie vorzugsweise an der konkaven Seite (23) jenes Stützmittels angeordnet ist.

## Revendications

1. Instrument pour saisir des spaghetti, comprenant un manche (2) ayant une portion de prise (21), une portion de base (3) qui est située à une des extrémités dudit manche et des éléments protubérants (32) faisant saillie à partir de ladite portion de base (3) pour saisir des spaghetti cuits, caractérisé en ce que certaines portions (23; 31; 32) dudit instrument de saisie définissent au moins un moyen de support comprenant au moins deux surfaces substantiellement en forme de U qui sont espacées l'une de l'autre le long d'une ligne droite imaginaire et positionnées de façon symétrique l'une par rapport à l'autre et par rapport à ladite ligne de façon à former une surface en section transversale qui est substantiellement constante le long de ladite ligne et en ce que l'instrument de saisie est pourvu d'un marquage (25) définissant la quantité de spaghetti qui peut être mesurée à l'intérieur desdits moyens de support.

2. Instrument pour saisir des spaghetti suivant la revendication 1, caractérisé en ce que lesdits moyens de support sont définis par les parois intérieures (23) dudit manche (2) et/ou au moins en partie par lesdits éléments protubérants (32).

3. Instrument pour saisir des spaghetti suivant la revendication 1, caractérisé en ce que la hauteur (H) de chaque élément protubérant (32) positionné de façon opposée et positionné de façon symétrique l'une par rapport à l'autre et par rapport à ladite ligne est égale.

4. Instrument pour saisir des spaghetti suivant la revendication 3, caractérisé en ce que la distance à la base (B) entre deux éléments protubérants (32) ainsi positionnés est aussi égale et par conséquent en ce que la distance entre les extrémités libres des éléments protubérants est aussi égale.

**5.** Instrument pour saisir des spaghetti suivant la revendication 1, caractérisé en ce que les marquages sur l'instrument de saisie définissent la quantité d'une manière liée à des portions.

**6.** Instrument pour saisir des spaghetti suivant la revendication 1, caractérisé en ce que ladite surface en section transversale excède 150 mm$^2$ $\pm$ 10 % et/ou est un multiple de 1, 2, 3, 4, etc... fois celle-ci.

**7.** Instrument pour saisir des spaghetti suivant la revendication 1, caractérisé en ce que ladite surface en section transversale est égale à 300 mm$^2$ et/ou est un multiple de 1; 1,5; 2; 2,5; 3; etc... fois celle-ci.

**8.** Instrument pour saisir des spaghetti suivant la revendication 2, caractérisé en ce que l'extrémité libre du manche (2) a une portion effilée (24) de telle sorte qu'un bord substantiellement tranchant (26) soit formé.

**9.** Instrument pour saisir des spaghetti suivant la revendication 1, caractérisé en ce que ledit marquage est ajusté sur ledit instrument de saisie.

**10.** Instrument pour saisir des spaghetti suivant la revendication 9, caractérisé en ce que ledit marquage est de préférence intégré audit instrument de saisie et en ce qu'il est soit sous forme écrite, soit sous forme de symboles, et qu'il est de préférence situé sur le côté concave (23) par rapport auxdits moyens de support.

Fig 1

Fig 7

Fig 2
Fransida

Fig 3
Sida

H

31

32

Vuxen 100g
Tonåring 130g
Barn 5-10år 50g
Barn 10-12 år 80g

Fig 4
Baksida

Fig 5

Fig 6

Fig. 8A

2 PORTIONS

25

23

2

32

Fig 8B

24

25

3

26

2 PORTIONS
1 PORTION